# EUROPEAN PATENT APPLICATION

(11) **EP 4 811 009 A1**
(43) Date of publication of application: **23.09.2026**
(21) Application number: 24891442.6
(22) Date of filing: 13.11.2024
(51) Int. Cl.: G02B 6/02

(54) **MULTICORE FIBER**

(30) Priority: 17.11.2023 JP 2023195677
(71) Applicant: Lightera Japan Co., Ltd., Tokyo 100-8322 (JP)
(72) Inventor: MUKASA, Kazunori, Tokyo 100-8322 (JP)
(74) Representative: SSM Sandmair
(86) International application number: PCT/JP2024/040372
(87) International publication number: WO 2025/105406

(57) **Abstract**

A multicore fiber includes a plurality of cores made of glass; a crosstalk suppressing portion made of glass and placed in between two cores from among the plurality of cores; and a cladding portion made of glass and enclosing an outer periphery of the plurality of cores and an outer periphery of the crosstalk suppressing portion. The maximum refractive index of the cores is greater than the average refractive index of the cladding portion. The minimum refractive index of the crosstalk suppressing portion is smaller than the average refractive index of the cladding portion. The distances from the two cores to the crosstalk suppressing portion are mutually different.

## Description

### Field

The present invention relates to a multicore fiber.

### Background

In a multicore fiber that includes a plurality of cores, as a configuration for making the cores distinguishable in a cross-section, the most common method is to provide a part called a marker in the cladding portion. A marker is a part that has a different refractive index from the refractive index of the cladding portion and that does not contribute in optical propagation. When a cross-section of a multicore fiber is overserved under a microscope, such a marker gets observed as a region having a different contrast than the cladding portion. However, in this method, it becomes necessary to prepare a glass preform for the purpose of forming a marker.

In that regard, methods have been proposed by which, in a multicore fiber, the cores are made distinguishable by arranging them asymmetrically with respect to the central axis of the cladding portion (refer to Patent Literature 1 and Non Patent Literature 1). Moreover, a method has been proposed by which, in order to make the cores distinguishable, stepped cores and trench cores are used as a plurality of cores (refer to Patent Literature 2). In the method proposed in Patent Literature 2, a plurality of trench cores is configured using cores in which the center cores have mutually different diameters and mutually different refractive indices, thereby making the cores distinguishable. Moreover, trench layers present in the trench cores also have the function of suppressing the inter-core crosstalk in the multicore fiber.

### Citation List

### Patent Literature

[Patent Literature 1] International Publication Pamphlet No. WO 2022/210786

### Non Patent Literature

[Non Patent Literature 1] Y. Sasaki et al., IEICE EXAT Nov. 2020-13 (2020)
[Non Patent Literature 2] Y. Amma er al., OFC2015, Th4C.4, (2015)

### Summary

### Technical Problem

However, in the methods involving an asymmetrical arrangement as disclosed in Patent Literature 1 and Non Patent Literature 1, it becomes difficult to manufacture optical components that perform optical coupling with the cores, such as optical components called FIFO devices. On the other hand, in the method proposed in Non Patent Literature 2, when there are significant differences in the diameters and the refractive indices of the center cores of a plurality of trench cores, the optical properties of the center cores also become significantly different from each other. In contrast, when there are only minor differences in the diameters and the refractive indices of the center cores, the distinguishability of the center cores undergoes a decline. Moreover, in Non Patent Literature 2, the number of trench cores is large and accordingly the number of trench layers is also large, thereby making the configuration complex.

The present invention has been made in view of the issues explained above, and it is an objective of the present invention to provide a multicore fiber in which, with a simple configuration, not only the inter-core crosstalk is suppressed, but the center cores are easily distinguishable too.

### Solution to Problem

To solve the above-described problem and achieve the object, a multicore fiber according to one aspect of the present invention includes: a plurality of cores made of glass; a crosstalk suppressing portion made of glass and placed in between two cores from among the plurality of cores; and a cladding portion made of glass and enclosing an outer periphery of the plurality of cores and an outer periphery of the crosstalk suppressing portion, wherein a maximum refractive index of the cores is greater than an average refractive index of the cladding portion, a minimum refractive index of the crosstalk suppressing portion is smaller than the average refractive index of the cladding portion, and distances from the two cores to the crosstalk suppressing portion are mutually different.

A multicore fiber according to one aspect of the present invention includes: three or more cores made of glass; two or more crosstalk suppressing portions each of which is made of glass and is placed in between two cores from among the three or more cores; a cladding portion made of glass and enclosing an outer periphery of the three or more cores and an outer periphery of the crosstalk suppressing portions, wherein a maximum refractive index of the cores is greater than an average refractive index of the cladding portion, a minimum refractive index of the crosstalk suppressing portions is smaller than the average refractive index of the cladding portion, and from among the two or more crosstalk suppressing portions, at least two crosstalk suppressing portions have mutually different diameters.

Distances from the two cores to the crosstalk suppressing portion may be mutually different.

A marker having a different refractive index than a refractive index of the cladding portion and not contributing in optical propagation may not be present inside the cladding portion.

At least some part of the crosstalk suppressing portion may be made of silica glass containing fluorine.

The cores may be made of silica glass containing at least either germanium, or fluorine, or chlorine, or potassium, or sodium.

The cores propagate light, which is input thereto, in single mode and, at wavelength of the light, may have effective core areas to be equal to or greater than 60 µm² and 180 µm².

Number of the cores may be equal to or greater than two and equal to or smaller than 19.

The cores may be disposed to have rotational symmetry with respect to central axis the cladding portion. Advantageous Effects of Invention

According to the present invention, a multicore fiber can be achieved in which, with a simple configuration, not only the inter-core crosstalk is suppressed, but the center cores are easily distinguishable too.

### Brief Description of Drawings

FIG. 1 is a schematic cross-sectional view of a multicore fiber according to a first embodiment.
FIG. 2A is a diagram illustrating the changes occurring in inter-core crosstalk XT.
FIG. 2B is a diagram illustrating the changes occurring in the cutoff wavelength.
FIG. 2C is a diagram illustrating the changes occurring in the cutoff wavelength.
FIG. 3A is a diagram illustrating the changes occurring in the inter-core crosstalk XT.
FIG. 3B is a diagram illustrating the changes occurring in the cutoff wavelength.
FIG. 3C is a diagram illustrating the changes occurring in the cutoff wavelength.
FIG. 4 is an explanatory diagram for explaining a manufacturing method for manufacturing the multicore fiber illustrated in FIG. 1.
FIG. 5 is a schematic cross-sectional view of a multicore fiber according to a second embodiment.
FIG. 6 is a schematic cross-sectional view of a multicore fiber according to a third embodiment.
FIG. 7 is a schematic cross-sectional view of a multicore fiber according to a fourth embodiment.
FIG. 8 is a schematic cross-sectional view of a multicore fiber according to a fifth embodiment.

### Description of Embodiments

Exemplary embodiments of the present invention are described below in detail with reference to the accompanying drawings. However, the present invention is not limited by the embodiments described below. In the drawings, identical or corresponding constituent elements are referred to by the same reference numerals, and their explanation is not given repeatedly. Moreover, in the present written description, the cutoff wavelength or the effective cutoff wavelength implies the cable cutoff wavelength (λcc) defined in ITU-T G.650.1 of the International Telecommunications Union (ITU). Regarding the other terms that are not specifically defined in the present written description, it is assumed that the definitions and the measurement methods given in G.650.1 and G.650.2 are followed.

### (First embodiment)

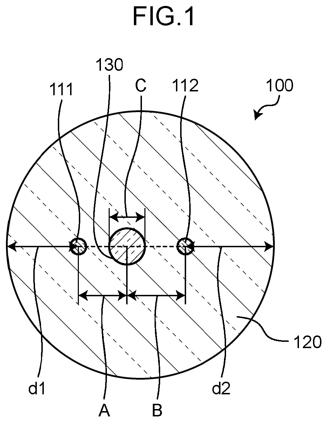

FIG. 1 is a schematic cross-sectional view of a multicore fiber according to a first embodiment. A multicore fiber 100 is made of glass, such as silica glass, and includes cores 111 and 112, a cladding portion 120, and a crosstalk suppressing portion 130. The cores 111 and 112 represent an example of a plurality of cores.

The cores 111 and 112 have a substantially circular cross-section, and are disposed to have two-fold rotational symmetry with respect to the central axis of the cladding portion 120 that also has a substantially circular cross-section. The maximum refractive index of the core 111 is higher than the average refractive index of the cladding portion 120. Herein, the average refractive index of the cladding portion 120 implies the average refractive index in a radial direction of the cladding portion 120. Moreover, the maximum refractive index of the core 112 is higher than the average refractive index of the cladding portion 120. The cores 111 and 112 can contain at least either germanium, or fluorine, or chlorine, or potassium, or sodium. The refractive index profiles of the cores 111 and 112 are, for example, stepped refractive index profiles.

The crosstalk suppressing portion 130 has a substantially circular cross-section and is placed in between the cores 111 and 112. The fact that the crosstalk suppressing portion 130 is placed in between the cores 111 and 112 implies that, in a cross-section perpendicular to the longitudinal direction, a virtual line segment joining the central axes of the cores 111 and 112 intersects with the crosstalk suppressing portion 130. The minimum refractive index of the crosstalk suppressing portion 130 is smaller than the average refractive index in a radial direction of the cladding portion 120. At least some part of the crosstalk suppressing portion 130 can be made of silica glass containing fluorine. The crosstalk suppressing portion 130 represents an example of a crosstalk suppressing portion that is placed in between any two cores from among a plurality of cores.

The cladding portion 120 encloses the outer periphery of the cores 111 and 112 and the outer periphery of the crosstalk suppressing portion 130. At least some part of the cladding portion 120 can be made of silica glass containing fluorine, or can be made of pure silica glass. Herein, pure silica glass implies silica glass that has extremely high purity, that practically does not contain a dopant meant for varying the refractive index, and that has the refractive index of about 1.444 at the wavelength of 1550 nm.

The cores 111 and 112 have an identical diameter (core diameter) 2a. Moreover, the relative refractive-index difference of the maximum refractive index of the core 111 with respect to the average refractive index of the cladding portion 120 and the relative refractive-index difference of the maximum refractive index of the core 112 with respect to the average refractive index of the cladding portion 120 are identical and are equal to Δ1 representing a positive value. Furthermore, the relative refractive-index difference of the minimum refractive index of the crosstalk suppressing portion 130 with respect to the average refractive index of the cladding portion 120 is equal to Δ- representing a negative value.

Herein, the distances from the two cores 111 and 112 to the crosstalk suppressing portion 130 are different from each other. That is, as illustrated in FIG. 1, a distance A between the central axis of the core 111 and the central axis of the crosstalk suppressing portion 130 is different from a distance B between the central axis of the core 112 and the central axis of the crosstalk suppressing portion 130.

In the multicore fiber 100 configured in the manner explained above, the cores 111 and 112 have the same relative refractive-index difference and the same core diameter within the margin of ±10%. As a result, in the multicore fiber 100, the optical properties of the cores 111 and 112 get roughly determined by the relative refractive-index difference and the core diameter, and hence there is not much difference in their optical properties. Regarding the crosstalk suppressing portion 130, the relative refractive-index difference Δ- is a negative value. Hence, while having a simple structure, the crosstalk suppressing portion 130 has the function of suppressing the crosstalk between the cores 111 and 112 in an identical manner to the function of a trench layer. Moreover, since the distances from the two cores 111 and 112 to the crosstalk suppressing portion 130 are different from each other, when the cross-sectional surface of the multicore fiber 100 is observed under a microscope, the cores 111 and 112 are easily distinguishable from each other. That is, the crosstalk suppressing portion 130 not only has the function of suppressing the inter-core crosstalk but also has the marker function for ensuring distinguishability of the cores.

As a result, in the multicore fiber 100, with a simple configuration, not only the inter-core crosstalk is suppressed, but the cores 111 and 112 are easily distinguishable too. Moreover, the cladding portion 120 is no longer required to include a marker that has a different refractive index from the refractive index of the cladding portion 120 and that does not contribute in optical propagation; and the cores 111 and 112 are no longer required to be asymmetrically arranged for not having rotational symmetry with respect to the central axis of the cladding portion 120.

The present inventors performed following simulated calculation in order to find out the impact of the crosstalk suppressing portion 130 on the optical properties of the cores 111 and 112 in the multicore fiber 100. That is, in the multicore fiber 100 illustrated in FIG. 1, the distance A was varied, or the distance B was varied, or the relative refractive-index difference Δ- was varied, or a diameter C of the crosstalk suppressing portion 130 was varied; and the changes in the cutoff wavelength and the inter-core crosstalk were calculated.

Meanwhile, with reference to FIG. 1, d1 represents the shortest distance from the central axis of the core 111 to the outer periphery of the cladding portion 120. Similarly, d2 represents the shortest distance from the central axis of the core 112 to the outer periphery of the cladding portion 120. Those shortest distances are also called the cladding thickness. In the present calculation, the shortest distances d1 and d2 were set to 40 µm. Moreover, the outer diameter of the cladding portion 120 (i.e., the cladding diameter) was set to 125 µm. Accordingly, the distance between the central axes of the cores 111 and 112 (i.e., the core pitch) became equal to 45 µm. Meanwhile, in the case in which the crosstalk suppressing portion 130 is not present in the multicore fiber 100, the structural parameters and the optical properties of the cores 111 and 112 happen to be as given below in Table 1. Herein, "MFD" represents the mode field diameter, Aeff represents the effective core area, and "XT" represents the inter-core crosstalk at the length of 100 km. With reference to Table 1, when there is no crosstalk suppressing portion, the inter-core crosstalk XT is equal to -28.5 dB.

**Table 1**

| Core properties | Value |
|---|---|
| Δ1 | 0.37% |
| Core diameter | 9 µm |
| Zero-dispersion wavelength (λ0) | 1304 nm |
| Dispersion slope @ λ0 | 0.090 ps/nm²/km |
| MFD @ 1.31 µm | 9.1 µm |
| MFD @ 1.55 µm | 10.1 µm |
| Aeff @ 1.55 µm | 80.5 µm² |
| λcc | 1254 nm |
| XT @ 1.55 µm | -28.5 dB |
| Confinement loss @ 1.625 µm | <0.001 dB/km |

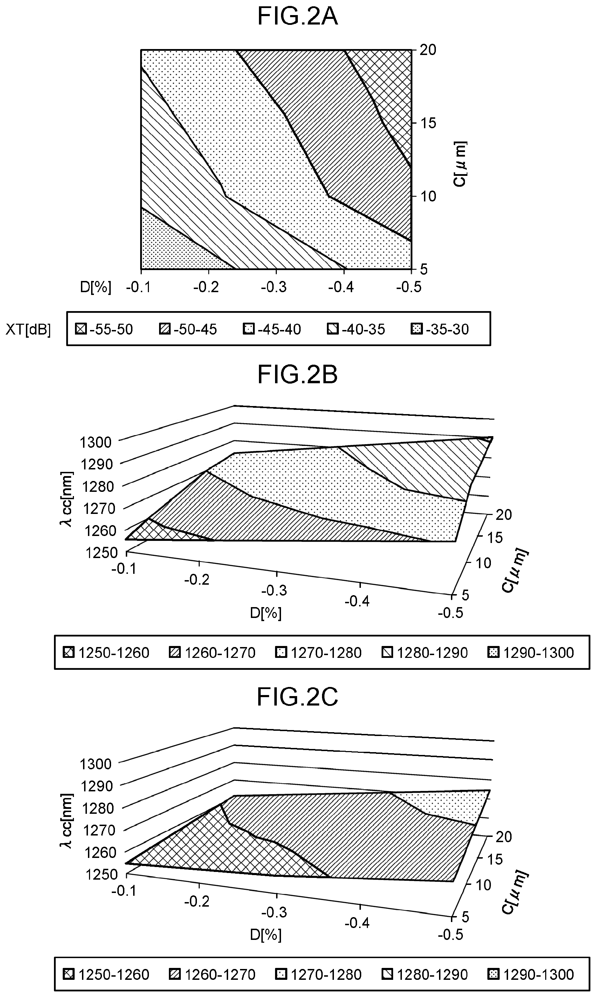

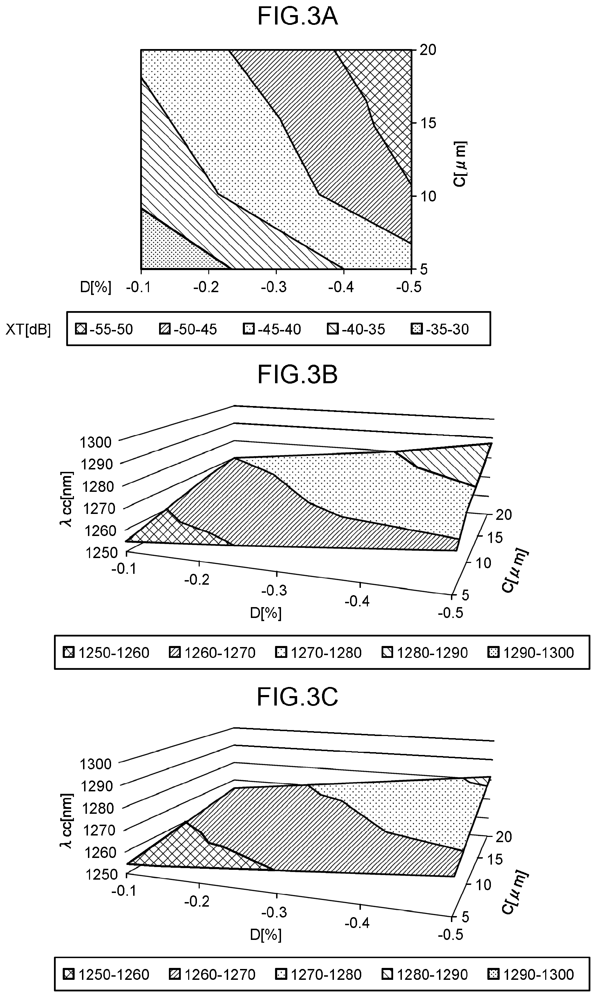

Subsequently, in FIGS. 2A, 2B, 2C, 3A, 3B, and 3C are illustrated the changes occurring in the inter-core crosstalk XT and the cutoff wavelength in the case in which the crosstalk suppressing portion 130 is provided and in which A [µm], B [µm], C, and D (=Δ-) are varied. FIGS. 2A, 2B, and 2C correspond to the case in which the distance A is equal to 15 µm and the distance B is equal to 30 µm. In FIG. 2A is illustrated the properties of the inter-core crosstalk XT; in FIG. 2B is illustrated the cutoff wavelength of the core 111; and in FIG. 2C is illustrated the cutoff wavelength of the core 112. FIGS. 3A, 3B, and 3C correspond to the case in which the distance A is equal to 20 µm and the distance B is equal to 25 µm. In FIG. 3A is illustrated the properties of the inter-core crosstalk XT; in FIG. 3B is illustrated the cutoff wavelength of the core 111; and in FIG. 3C is illustrated the cutoff wavelength of the core 112.

With reference to Table 1 and FIGS. 2A, 2B, 2C, 3A, 3B, and 3C; it was confirmed that, as a result of providing the crosstalk suppressing portion 130, there is a decline in the value of XT thereby implying suppression of the inter-core crosstalk. Moreover, it was confirmed that, greater the diameter C or greater the absolute value of the relative refractive-index difference D, there is a decline in the value of XT thereby implying even further suppression of the inter-core crosstalk. Moreover, when FIGS. 2A, 2B, and 2C were compared with FIGS. 3A, 3B, and 3C, it was confirmed that, even when the distance A was varied, there was no significant change in the inter-core crosstalk suppressing effect. That is, it was confirmed that, whether the crosstalk suppressing portion 130 was placed closer to the core 111 or closer to the core 112, there was no significant change in the inter-core crosstalk suppressing effect. Moreover, it was confirmed that, even when the values of A, B, C, and D were varied, there was no significant change in the cutoff wavelength. For example, with reference to Table 1, the cutoff wavelength is equal to 1254 nm. On the other hand, with reference to each of FIGS. 2A, 2B, 2C, 3A, 3B, and 3C, the cutoff wavelength is equal to or smaller than 1300 nm; and, for example, a light having the wavelength of 1310 nm can be transmitted in the single mode.

The present inventors also studied the changes occurring in the dispersion, the mode field diameter, and the effective core area in response to varying the values of A, B, C, and D. It was confirmed that, even when the values of A, B, C, and D were varied, there was no significant change in the dispersion, the mode field diameter, and the effective core area.

### (Manufacturing method)

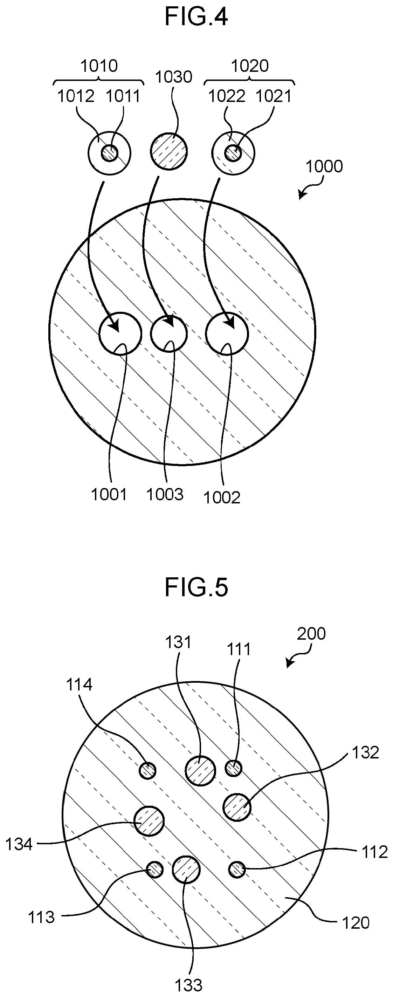

The multicore fiber 100 according to the first embodiment can be manufactured in the following manner, for example. Firstly, as illustrated in FIG. 4, a cylindrical cladding preform 1000 is prepared that constitutes some part of the cladding portion 120 of the multicore fiber 100. The cladding preform 1000 is can be manufactured using a known glass preform manufactured method such as the VAD (Vapor Phase Axial Deposition) method or the MCVD (Modified Chemical Vapor Deposition) method. Then, using a known boring method, holes 1001, 1002, and 1003 are formed on the cladding preform 1000, and surface cleaning is carried out as necessary. At that time, if the glass wall present in between the holes 1001, 1002, and 1003 is thin, it makes the manufacturing difficult. Hence, attention needs to be paid to the inner diameters and the relative positions of the holes 1001, 1002, and 1003 in such a way that the wall has an appropriate thickness, that is, the hole 1003 is not too close to the other holes 1001 and 1002.

On the other hand, core preforms 1010 and 1020 are prepared, and a glass rod 1030 is prepared. The core preforms 1010 and 1020 as well as the glass rod 1030 can be manufactured using a known glass preform manufacturing method such as the VAD method or the MCVD method. The core preform 1010 includes a core 1011 that constitutes the core 111 of the multicore fiber 100, and includes a cladding portion 1012 that encloses the outer periphery of the core 1011 and constitutes some part of the cladding portion 120 of the multicore fiber 100. The core preform 1020 includes a core 1021 that constitutes the core 112 of the multicore fiber 100, and includes a cladding portion 1022 that encloses the outer periphery of the core 1021 and constitutes some part of the cladding portion 120 of the multicore fiber 100. The glass rod 1030 represents the member serving as the crosstalk suppressing portion 130 of the multicore fiber 100, and is made of, for example, silica glass that is doped with fluorine in a substantially uniform manner.

Subsequently, the core preforms 1010 and 1020 and the glass rod 1030 are respectively inserted in the holes 1001, 1002, and 1003 formed on the cladding preform 1000; heating and fusing is carried out; and an optical fiber preform is manufactured. Then, using a known fiber drawing method, the multicore fiber 100 is drawn.

### (Second embodiment)

FIG. 5 is a schematic cross-sectional view of a multicore fiber according to a second embodiment. A multicore fiber 200 is made of glass such as silica glass, and includes cores 111, 112, 113, and 114; the cladding portion 120; and crosstalk suppressing portions 131, 132, 133, and 134.

The cores 111 to 114 have a substantially circular cross-section, and are arranged in a square lattice pattern. Moreover, the cores 111 to 114 are arranged to have four-fold rotational symmetry with respect to the central axis of the cladding portion 120 having a substantially circular cross-section.

The crosstalk suppressing portion 131 has a substantially circular cross-section, and is placed in between the cores 111 and 114 at a position closer to the core 111 than the core 114. The crosstalk suppressing portion 132 has a substantially circular cross-section, and is placed in between the cores 111 and 112 at a position closer to the core 111 than the core 112. The crosstalk suppressing portion 133 has a substantially circular cross-section, and is placed in between the cores 112 and 113 at a position closer to the core 113 than the core 112. The crosstalk suppressing portion 134 has a substantially circular cross-section, and is placed in between the cores 113 and 114 at a position equidistant from the cores 113 and 114. Thus, the crosstalk suppressing portions 131, 132, and 133 represent examples of crosstalk suppressing portions each of which is placed in between two cores at a position having different distances from those two cores.

Regarding the cores 111 to 114 and the crosstalk suppressing portions 131 to 134, the structural parameters (i.e., the diameter and the relative refractive-index difference) are same as the cores 111 and 112 and the crosstalk suppressing portion 130, respectively, of the multicore fiber 100 according to the first embodiment.

In the multicore fiber 200 configured in the manner explained above, there is not much difference in the optical properties of the cores 111 to 114. Moreover, the crosstalk suppressing portions 131 to 134 enable suppression of inter-core crosstalk while having a simple structure. Furthermore, in the multicore fiber 200, regarding the core 111, the distances to the crosstalk suppressing portions 131 and 132, which are placed in between the core 111 and the neighboring cores, are shorter than the distances for the neighboring cores. Moreover, regarding the core 112, the distances to the crosstalk suppressing portions 132 and 133, which are placed in between the core 112 and the neighboring cores, are longer than the distances for the neighboring cores. Furthermore, regarding the core 113, the distances to the crosstalk suppressing portions 132 and 133, which are placed in between the core 113 and the neighboring cores, are shorter than or same as the distances for the neighboring cores. Moreover, regarding the core 114, the distances to the crosstalk suppressing portions 134 and 131, which are placed in between the core 114 and the neighboring cores, are same as or longer than the distances for the neighboring cores. Thus, each of the cores 111 to 114 has a different positional relationship with the two crosstalk suppressing portions placed in between the concerned core and the corresponding neighboring cores. As a result, the cores 111 to 114 become easily distinguishable from each other.

Hence, in the multicore fiber 200, with a simple configuration, not only the inter-core crosstalk is suppressed, but the cores 111 to 114 are easily distinguishable too. Moreover, the cladding portion 120 is no longer required to include a marker; and the cores 111 to 114 are no longer required to be asymmetrically arranged with respect to the central axis of the cladding portion 120.

### (Third embodiment)

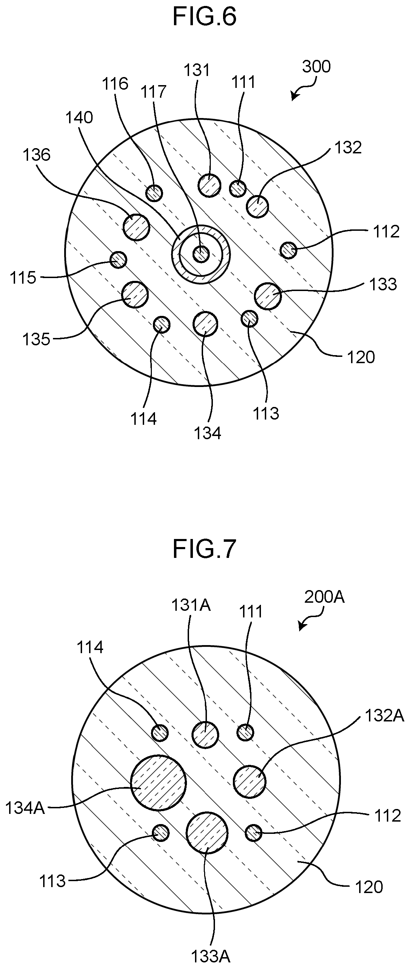

FIG. 6 is a schematic cross-sectional view of a multicore fiber according to a third embodiment. A multicore fiber 300 is made of glass such as silica glass, and includes cores 111, 112, 113, 114, 115, 116, and 117; the cladding portion 120; crosstalk suppressing portions 131, 132, 133, 134, 135, and 136; and a trench layer 140.

The cores 111 to 117 have a substantially circular cross-section, and are arranged in a triangular lattice pattern. Moreover, the cores 111 to 114 are arranged to have six-fold rotational symmetry with respect to the central axis of the cladding portion 120 having a substantially circular cross-section. The core 117 is placed at a position that substantially aligns with the central axis of the cladding portion 120.

The crosstalk suppressing portion 131 has a substantially circular cross-section and is placed in between the cores 111 and 116 at a position closer to the core 111 than the core 116. The crosstalk suppressing portion 132 has a substantially circular cross-section and is placed in between the cores 111 and 112 at a position closer to the core 111 than the core 112. The crosstalk suppressing portion 133 has a substantially circular cross-section and is placed in between the cores 112 and 113 at a position closer to the core 113 than the core 112. The crosstalk suppressing portion 134 has a substantially circular cross-section and is placed in between the cores 113 and 114 at a position equidistant from the cores 113 and 114. The crosstalk suppressing portion 135 has a substantially circular cross-section and is placed in between the cores 114 and 115 at a position equidistant from the cores 114 and 115. The crosstalk suppressing portion 136 has a substantially circular cross-section and is placed in between the cores 115 and 116 at a position equidistant from the cores 115 and 116. Thus, the crosstalk suppressing portions 131 to 136 represent examples of crosstalk suppressing portions each of which is placed in between two cores at a position having different distances from those two cores.

The trench layer 140 has a substantially ringshaped cross-section and encloses the outer periphery of the core 117.

Regarding the cores 111 to 117 and the crosstalk suppressing portions 131 to 136, the structural parameters are same as the cores 111 and 112 and the crosstalk suppressing portion 130, respectively, of the multicore fiber 100 according to the first embodiment. Moreover, in an identical manner to the crosstalk suppressing portion 131, the minimum refractive index of the trench layer 140 is smaller than the average refractive index in a radial direction of the cladding portion 120. At least some part of the trench layer 140 can be made of silica glass containing fluorine.

In the multicore fiber 300 configured in the manner explained above, there is not much difference in the optical properties of the cores 111 to 117. Moreover, the crosstalk suppressing portions 131 to 136 enable suppression of inter-core crosstalk while having a simple structure. The trench layer 140 suppresses the inter-core crosstalk between the core 117 and the cores 111 to 116 that are arranged around the core 117. Furthermore, in the multicore fiber 300, each of the cores 111 to 114 and the core 116 has a different positional relationship with the two crosstalk suppressing portions placed in between the concerned core and the corresponding neighboring cores. As a result, the cores 111 to 114 become easily distinguishable from each other. In turn, the cores 111 to 116 also become easily distinguishable from each other.

Thus, in the multicore fiber 300, with a simple configuration, not only the inter-core crosstalk is suppressed, but the cores 111 to 116 are easily distinguishable too. Moreover, the cladding portion 120 is no longer required to include a marker; and the cores 111 to 116 are no longer required to be asymmetrically arranged with respect to the central axis of the cladding portion 120.

### (Fourth embodiment)

FIG. 7 is a schematic cross-sectional view of a multicore fiber according to a fourth embodiment. A multicore fiber 200A is configured by substituting crosstalk suppressing portions 131A, 132A, 133A, and 134A for the cross talk suppressing portions 131 to 134 of the multicore fiber 200 illustrated in FIG. 5 according to the second embodiment.

The crosstalk suppressing portion 131A has a substantially circular cross-section and is placed in between the cores 111 and 114 at a position equidistant from the cores 111 and 114. The crosstalk suppressing portion 132A has a substantially circular cross-section and is placed in between the cores 111 and 112 at a position equidistant from the cores 111 and 112. The crosstalk suppressing portion 133A has a substantially circular cross-section and is placed in between the cores 112 and 113 at a position equidistant from the cores 112 and 113. The crosstalk suppressing portion 134A has a substantially circular cross-section and is placed in between the cores 113 and 114 at a position equidistant from the cores 113 and 114. The crosstalk suppressing portions 131A to 134A have the same relative refractive-index difference, but have mutually different diameters. More particularly, the diameters of the crosstalk suppressing portions 131A, 132A, 133A, and 134A are in ascending order of the crosstalk suppressing portions 131A, 132A, 133A, and 134A.

In the multicore fiber 200A, the cores 111 to 114 represent an example of three or more cores. The crosstalk suppressing portions 131A to 134A represent an example of crosstalk suppressing portions each of which is placed in between any two cores from among the three or more cores, and at least two of those two or more crosstalk suppressing portions have mutually different diameters.

In the multicore fiber 200A configured in the manner explained above, there is not much difference in the optical properties of the cores 111 to 114. Moreover, the crosstalk suppressing portions 131A to 134A enable suppression of inter-core crosstalk while having a simple structure. Furthermore, in the multicore fiber 200A, since the crosstalk suppressing portions 131A to 134A have mutually different diameters, the cores 111 to 114 become easily distinguishable from each other.

Thus, in the multicore fiber 200A, with a simple configuration, not only the inter-core crosstalk is suppressed, but the cores 111 to 114 are easily distinguishable too. Moreover, the cladding portion 120 is no longer required to include a marker; and the cores 111 to 114 are no longer required to be asymmetrically arranged with respect to the central axis of the cladding portion 120.

### (Fifth embodiment)

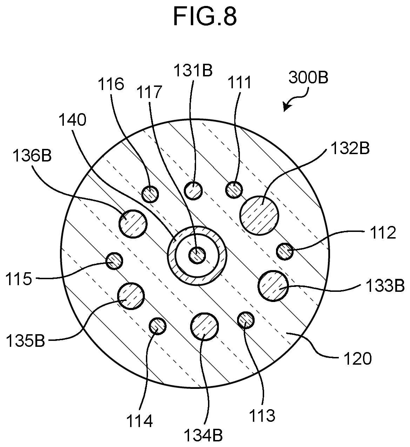

FIG. 8 is a schematic cross-sectional view of a multicore fiber according to a fifth embodiment. A multicore fiber 300A is configured by substituting crosstalk suppressing portions 131B, 132B, 133B, 134B, 135B, and 136B for the cross talk suppressing portions 131 to 136 of the multicore fiber 300 illustrated in FIG. 6 according to the second embodiment.

The crosstalk suppressing portion 131B has a substantially circular cross-section and is placed in between the cores 111 and 116 at a position equidistant from the cores 111 and 116. The crosstalk suppressing portion 132B has a substantially circular cross-section and is placed in between the cores 111 and 112 at a position equidistant from the cores 111 and 112. The crosstalk suppressing portion 133B has a substantially circular cross-section and is placed in between the cores 112 and 113 at a position equidistant from the cores 112 and 113. The crosstalk suppressing portion 134B has a substantially circular cross-section and is placed in between the cores 113 and 114 at a position equidistant from the cores 113 and 114. The crosstalk suppressing portion 135B has a substantially circular cross-section and is placed in between the cores 114 and 115 at a position equidistant from the cores 114 and 115. The crosstalk suppressing portion 136B has a substantially circular cross-section and is placed in between the cores 115 and 116 at a position equidistant from the cores 115 and 116. The crosstalk suppressing portions 131B to 133B have the same relative refractive-index difference, but have mutually different diameters. More particularly, the diameters of the crosstalk suppressing portions 131B to 133B are in descending order of the crosstalk suppressing portions 132B, 133B, and 131B. The crosstalk suppressing portions 133B to 136B have the same relative refractive-index difference and the same diameter.

In the multicore fiber 300B, the cores 111 to 114 represent an example of three or more cores. The crosstalk suppressing portions 131B to 133B represent an example of crosstalk suppressing portions each of which is placed in between two of the three or more cores, and at least two of those two or more crosstalk suppressing portions have mutually different diameters.

In the multicore fiber 300B configured in the manner explained above, there is not much difference in the optical properties of the cores 111 to 114. Moreover, the crosstalk suppressing portions 131B to 136B enable suppression of inter-core crosstalk while having a simple structure. Furthermore, in the multicore fiber 300B, since the crosstalk suppressing portions 131B to 133B have mutually different diameters, the cores 111 to 116 become easily distinguishable from each other. More particularly, when it is known that the crosstalk suppressing portion 131B present in the counterclockwise direction of the core 111 has a relatively smaller diameter, the crosstalk suppressing portion 132B present in the counterclockwise direction of the core 112 and the clockwise direction of the core 111 has a relatively greater diameter, and the crosstalk suppressing portion 132B present in the counterclockwise direction of the core 113 and the clockwise direction of the core 112 has the diameter between the diameters of the crosstalk suppressing portions 131B; the cores 111 to 113 become distinguishable from each other, and moreover the cores 114 to 116 also become distinguishable from each other.

As a result, in the multicore fiber 300B, with a simple configuration, not only the inter-core crosstalk is suppressed, but the cores 111 to 116 are easily distinguishable too. Moreover, the cladding portion 120 is no longer required to include a marker; and the cores 111 to 116 are no longer required to be asymmetrically arranged with respect to the central axis of the cladding portion 120.

Meanwhile, in the multicore fiber according to any one of the embodiments described above, it is desirable that the cores perform single-mode propagation of the input light. Herein, the input wavelength represents the wavelength used as the signal light in the optical fiber communication and, for example, represents the light in the 1.55 µm range.

Moreover, from the perspective of compatibility with a large number of conventional optical fibers, in addition to having the cores perform single-mode propagation of the input light, it is desirable that the effective core area (Aeff) at the wavelength of the input light is equal to or greater than 60 µm² and equal to or smaller than 180 µm².

### (Working example 1)

As a working example 1, a multicore fiber was manufactured to have the configuration of the multicore fiber 100 illustrated in FIG. 1 according to the first embodiment. The core preforms, the cladding preform, and the glass rod were manufactured based on the VAD method. Each core preform was configured to include a core and a cladding portion having the diameter to be twice the diameter of the core.

The structural parameters and the optical properties of the multicore fiber according to the working example 1 are given in Table 2. With reference to Table 2, "core 1" and "core 2" imply the cores equivalent to the cores 111 and 112, respectively, of the multicore fiber 100. The distance between the central axis of the core 1 and the crosstalk suppressing portion (XT suppressing portion) was set to 21 µm, and the distance between the central axis of the core 2 and the XT suppressing portion was set to 24 µm. Moreover, it was ensured that, in a cross-section, the central axis of the XT suppressing portion is positioned on a virtual line joining the central axes of the cores 1 and 2.

With reference to Table 2, at Δ1, the cladding ratio represents the relative refractive-index difference of the maximum refractive index of the core with respect to the average refractive index of the cladding, and the pure silica ratio represents the relative refractive-index difference of the maximum refractive index of the core with respect to the refractive index of pure silica glass. In an identical manner, at Δ-, the cladding ratio represents the relative refractive-index difference of the minimum refractive index of the crosstalk suppressing portion with respect to the average refractive index of the cladding portion, and the pure silica ratio represents the relative refractive-index difference of the minimum refractive index of the crosstalk suppressing portion with respect to the refractive index of pure silica glass. Moreover, Δclad represents the relative refractive-index difference of the average refractive index of the cladding portion with respect to the refractive index of pure silica glass.

With reference to Table 2, the cores 1 and 2 had the substantially same optical properties such as the effective core area, the cutoff wavelength, and the transmission loss. Regarding the effective core area, the design was made with the aim of having the value of 110 µm²; and it was possible to achieve a value that was substantially according to the design. Moreover, it was confirmed that the light having the cutoff wavelength to be equal to or smaller than 1530 nm and having the wavelength in the 1.55 µm range was propagatable in the single mode. Furthermore, the inter-core crosstalk was equal to -37.5 dB, which was equal to or smaller than -30 dB and moreover equal to or smaller than -35 dB.

**Table 2**

| | Core 1 | Core 2 | XT suppressing portion |
|---|---|---|---|
| Δ1 [%] (Cladding ratio/Pure silica ratio) | 0.27/0.09 | 0.27/0.09 | - |
| Δ- [%] (Cladding ratio/Pure silica ratio) | - | - | -0.20/-0.38 |
| Δclad [%] (Pure silica ratio) | -0.18 | -0.18 | -0.18 |
| Diameter [mm] | 11.0 | 11.0 | 15.0 |
| Aeff @ 1550 nm [µm²] | 110 | 111 | - |
| λcc [nm] | 1327 | 1318 | - |
| Transmission loss [dB/km] | 0.152 | 0.151 | - |
| XT @ 1.55 µm [dB] | - | - | -37.3 |

Meanwhile, when a technician observed an end face of the multicore fiber according to the working example 1 and carried out a core distinguishing test for several times, it was confirmed that the cores could be distinguished with little to no trouble and with the accuracy rate of 99.9%.

### (Working example 2)

As a working example 2, a multicore fiber was manufactured to have the configuration of the multicore fiber 200 illustrated in FIG. 5 according to the second embodiment. The core preforms, the cladding preform, and the glass rods were manufactured based on the VAD method. Each core preform was configured to include a core and a cladding portion having the diameter to be twice the diameter of the core.

The structural parameters and the optical properties of the multicore fiber according to the working example 2 are given in Table 3. With reference to Table 3, "core 1", "core 2", "core 3", and "core 4" imply the cores equivalent to the cores 111, 112, 113, and 114, respectively, of the multicore fiber 200. The distance between the central axis of the core 1 and the crosstalk suppressing portion (XT suppressing portion) was set to 19 µm, and the distance between the central axis of the core 2 and the XT suppressing portion was set to 22 µm. Moreover, it was ensured that, in a cross-section, the central axis of each XT suppressing portion is positioned on a virtual line joining the central axes of neighboring cores. Furthermore, the diameter of the crosstalk suppressing portions was set to 14 µm. Moreover, the relative refractive-index difference of the minimum refractive index of each crosstalk suppressing portion with respect to the average refractive index of the cladding portion was set to -0.20%, and the relative refractive-index difference of the minimum refractive index of each crosstalk suppressing portion with respect to the refractive index of pure silica glass was set to -0.45%.

With reference to Table 3, the cores 1 to 4 had the substantially same optical properties such as the effective core area, the cutoff wavelength, and the transmission loss. Regarding the effective core area, the design was made with the aim of having the value of 90 µm²; and it was possible to achieve a value that was substantially according to the design. Moreover, it was confirmed that the light having the cutoff wavelength to be equal to or smaller than 1530 nm and having the wavelength in the 1.55 µm range was propagatable in the single mode. Furthermore, the inter-core crosstalk between the cores 1 and 2 was equal to -36.7 dB, the inter-core crosstalk between the cores 2 and 3 was equal to -35.9 dB, the inter-core crosstalk between the cores 3 and 4 was equal to -37.1 dB, and the inter-core crosstalk between the cores 4 and 1 was equal to -36.4 dB. Thus, each inter-core crosstalk was equal to or smaller than -30 dB and moreover equal to or smaller than -35 dB.

**Table 3**

| | Core 1 | Core 2 | Core 3 | Core 4 |
|---|---|---|---|---|
| Δ1 [%] (Cladding ratio/Pure silica ratio) | 0.35/0.10 | 0.35/0.10 | 0.35/0.10 | 0.35/0.10 |
| Δclad [%] (Pure silica ratio) | -0.25 | -0.25 | -0.25 | -0.25 |
| Core diameter [mm] | 10.0 | 10.0 | 10.0 | 10.0 |
| Aeff @ 1550 nm [µm²] | 89 | 91 | 90 | 90 |
| λcc [nm] | 1404 | 1387 | 1396 | 1391 |
| Transmission loss [dB/km] | 0.155 | 0.153 | 0.154 | 0.155 |

Meanwhile, when a technician observed an end face of the multicore fiber according to the working example 2 and carried out a core distinguishing test for several times, it was confirmed that the cores could be distinguished with little to no trouble and with the accuracy rate of 99.5%.

In the embodiments described above, a plurality of cores have the same relative refractive-index difference and the same core diameter. As long as the relative refractive-index difference and the absolute value of the difference in the core diameters is same within the margin of ±10%, the optical properties such as the effective core area, the dispersion, the dispersion slope, and the transmission loss are substantially same. For example, the absolute value in the corresponding difference is equal to or smaller than 10%. Hence, that is the desirable situation.

Moreover, in the embodiments described above, although the number of cores is equal to two, four, or seven; there is no particular restriction on the number of cores. For example, the number of cores is equal to or greater than two and equal to or smaller than 19. Furthermore, in the embodiments described above, although the cores are disposed to have two-fold rotational symmetry, four-fold rotational symmetry, or six-fold rotational symmetry with respect to the central axis of the cladding portion; there is no particular restriction on the rotational symmetry. Thus, when n represents an arbitrary integer equal to or greater than two, the center cores can be disposed to have n-fold rotational symmetry.

Meanwhile, the present invention is not limited by the embodiments described above. Thus, a configuration obtained by appropriately combining the constituent elements explained above also falls within the scope of the present invention. For example, in a configuration illustrated in FIG. 7 according to the fourth embodiment in which the crosstalk suppressing portions have mutually different diameters, each crosstalk suppressing portion that is present in between two cores can be placed at a position having different distances from those two cores as explained with reference to FIG. 5 according to the second embodiment. Moreover, the crosstalk suppressing portions can be formed as holes. Thus, although the invention has been described with respect to specific embodiments for a complete and clear disclosure, the appended claims are to be construed as embodying all modifications and alternative constructions that may occur to one skilled in the art that fairly fall within the basic teaching herein set forth.

### Industrial Applicability

The present invention can be used in a multicore fiber.

### Reference Signs List

100, 200, 300, 300A, 300B multicore fiber
111, 112, 113, 114, 115, 116, 117, 1011, 1021 core
120, 1012, 1022 cladding portion
130, 131, 131A, 131B, 132, 132A, 132B, 133, 133A, 133B, 134, 134A, 134B, 135, 135B, 136, 136B crosstalk suppressing portion
140 trench layer
1000 cladding preform
1001, 1002, 1003 hole
1010, 1020 core preform
1030 glass rod

## Claims

1. A multicore fiber comprising:
a plurality of cores made of glass;
a crosstalk suppressing portion made of glass and placed in between two cores from among the plurality of cores; and
a cladding portion made of glass and enclosing an outer periphery of the plurality of cores and an outer periphery of the crosstalk suppressing portion, wherein
a maximum refractive index of the cores is greater than an average refractive index of the cladding portion,
a minimum refractive index of the crosstalk suppressing portion is smaller than the average refractive index of the cladding portion, and
distances from the two cores to the crosstalk suppressing portion are mutually different.

2. A multicore fiber comprising:
three or more cores made of glass;
two or more crosstalk suppressing portions each of which is made of glass and is placed in between two cores from among the three or more cores;
a cladding portion made of glass and enclosing an outer periphery of the three or more cores and an outer periphery of the crosstalk suppressing portions, wherein
a maximum refractive index of the cores is greater than an average refractive index of the cladding portion,
a minimum refractive index of the crosstalk suppressing portions is smaller than the average refractive index of the cladding portion, and
from among the two or more crosstalk suppressing portions, at least two crosstalk suppressing portions have mutually different diameters.

3. The multicore fiber according to claim 2, wherein distances from the two cores to the crosstalk suppressing portion are mutually different.

4. The multicore fiber according to any one of claims 1 to 3, wherein a marker having a different refractive index than a refractive index of the cladding portion and not contributing in optical propagation is not present inside the cladding portion.

5. The multicore fiber according to any one of claims 1 to 3, wherein at least some part of the crosstalk suppressing portion is made of silica glass containing fluorine.

6. The multicore fiber according to any one of claims 1 to 3, wherein the cores are made of silica glass containing at least either germanium, or fluorine, or chlorine, or potassium, or sodium.

7. The multicore fiber according to any one of claims 1 to 3, wherein the cores propagate light, which is input thereto, in single mode and, at wavelength of the light, have effective core areas to be equal to or greater than 60 µm² and 180 µm².

8. The multicore fiber according to any one of claims 1 to 3, wherein number of the cores is equal to or greater than two and equal to or smaller than 19.

9. The multicore fiber according to any one of claims 1 to 3, wherein the cores are disposed to have rotational symmetry with respect to central axis the cladding portion.
